# EUROPEAN PATENT APPLICATION

(11) **EP 4 667 742 A2**
(43) Date of publication of application: **24.12.2025**
(21) Application number: 25214299.7
(22) Date of filing: 22.12.2021
(51) Int. Cl.: F03D 13/20

(54) **A WIND TURBINE TOWER WITH A PLURALITY OF VORTEX GENERATORS**

(62) Divisional of application: 21383193.6
(71) Applicant: Nordex Energy Spain S.A.U., 31395 Barásoain (Navarra) (ES)
(72) Inventor: Arlabán Gabeiras, Teresa, 31395 Barásoain (Navarra) (ES)
(74) Representative: Hauck Patent- und Rechtsanwälte PartmbB

(57) **Abstract**

A wind turbine tower comprising a longitudinal axis, an outer surface and a plurality of vortex generators attached to the outer surface, wherein
• each vortex generator comprises at least one fin arranged substantially perpendicular to the outer surface and having a fin length and a fin height,
**•** the wind turbine tower in a first height section is provided with a plurality of the vortex generators in a first pattern having a first vortex generator density, and in a second height section is provided with a plurality of the vortex generators in a second pattern having a second vortex generator density, wherein the vortex generator densities are defined in terms of the total number of vortex generators per height unit, and
• the first vortex generator density is higher than the second vortex generator density.

## Description

The invention relates to a wind turbine tower with a plurality of vortex generators.

Under load, wind turbine towers may experience various forces which may excite a bending vibration of the wind turbine tower. This leads to additional loads of the wind turbine tower. If the exciting forces are periodical and match a natural frequency of the wind turbine tower, large resonance amplitudes may occur, possibly damaging the wind turbine tower. Periodic forces on wind turbine towers may arise from the wind blowing across the tower structure, thereby forming vortices shedding alternately from opposite sides of the wind turbine tower, phenomenon known as vortex shedding, leading to a Kármán vortex street.

To counteract such vibrations, various active and passive damping means have been suggested, e. g. in the documents EP 2 703 640 A1 and WO 2014/040598 A1. In addition, it is known to influence the flow across the wind turbine tower by structuring of the outer surface of the wind turbine tower or by attaching different structural elements to the outer surface of the wind turbine tower, for example flaps or strakes arranged vertically or helically, in particular as a so-called Scruton spiral. While these approaches may help to mitigate the excitation of vibrations, they typically add significantly to the costs, weight and production effort of the wind turbine towers.

From the document EP 3 565 967 B1 it has become known to attach vortex generators to an outer surface of a wind turbine tower. The vortex generators comprise a plurality of fins having a triangular shape and being arranged perpendicular to a longitudinal axis of the wind turbine tower.

From the document WO 2020/057706 A1 it has become known to attach vortex generators to an outer surface of a wind turbine tower especially during installation of the wind turbine tower, before the nacelle is installed. The vortex generators have rectangular fins and shall cover an upper part or an intermediate part of the height of the wind turbine tower. The authors analyse the effect of the vortex generators under various operating conditions. Based on calculated amplitudes of first and second mode tower vibrations, they conclude the best positioning of vortex generators is a zone of 30 meters extending from 70 to 100 meter above the bottom of a 140 meter tower.

Starting therefrom, it is the object of the invention to provide a wind turbine tower with more efficient means to reduce wind-induced vibrations.

This object is solved by the wind turbine tower with the features of claim 1. Aspects of the invention are given in the dependent claims.

The wind turbine tower comprises a longitudinal axis, an outer surface and a plurality of vortex generators attached to the outer surface, wherein
- each vortex generator comprises at least one fin arranged substantially perpendicular to the outer surface and having a fin length and a fin height, the fin height measured in a direction perpendicular to the outer surface, the fin length extending at an angle in the range of 5° to 45° with reference to a plane perpendicular to the longitudinal axis,
- the wind turbine tower in a first height section is provided with a plurality of the vortex generators in a first pattern having a first vortex generator density, and in a second height section is provided with a plurality of the vortex generators in a second pattern having a second vortex generator density, wherein the vortex generator densities are defined in terms of the total number of vortex generators per height unit of the respective pattern, and
- the first vortex generator density is higher than the second vortex generator density.

The wind turbine tower may comprise one or more tower segments each having a cylindrical or conical shape with cylindrical cross-section. **If** more than one tower segment is used, all tower segments are adapted to be connected one on top of the other. The tower segments or a part thereof may be made of steel or of concrete, for example. In particular, all of the tower segments are made of steel, or at least a number of upper tower segments, such as all tower segments except for one, two, three or more lower-most tower segments.

The wind turbine tower may comprise a tower head, in particular with a mounting section adapted to carry a nacelle of the wind turbine tower. The wind turbine tower may be designed for a wind turbine with a rotor having a horizontal axis. The wind turbine tower may comprise a bottom end designed for resting on a wind turbine tower foundation.

The fins of the vortex generators may have a plate-like shape, wherein they may be planar or may include some curvature. They are arranged perpendicular to the outer surface, which means they extend from the outer surface (or from a base member of the vortex generator attached to the outer surface) in a direction away from the outer surface substantially perpendicular to the outer surface and/or in a radial direction with reference to the longitudinal axis. Optionally, the angle of the fins with reference to the outer surface may depart from 90° to some extent.

The fin height corresponds to the distance between an outermost point of the respective fin, forming a tip or an outer edge of the fin, and a fin base at or close to the outer surface.

The fin length is measured in a direction perpendicular to the fin height and corresponds to a distance between a leading edge and a trailing edge of the fin. The direction in which the fin length extends is arranged at an angle in the range of 5° to 45° with reference to a plane perpendicular to the longitudinal axis. When the tower is erected, this plane is horizontal, so the wind passing by the tower in a more or less horizontal direction will be deflected by the fins in accordance with the angle, so that small vortices are formed. In other words, the vortex generators are adapted to generate vortices in an airstream passing by the outer surface. These vortices will guide faster flowing air into the boundary layer so that separation of flow from the outer surface is counteracted. The airflow can follow the outer surface for a longer distance behind the vortex generators so that the vortex-shedding effect is reduced.

The first and second height sections which are provided with vortex generators may each extend between an upper and a lower horizontal plane each. When both height sections are adjacent, the lower horizontal plane of the upper height section is identical to the upper horizontal plane of the lower height section. However, the height sections need not be adjacent, there may also be separated by a gap. The height sections do not overlap. Typically, each height section will have a height of several meters, for example in a range of 5 m to 50 m. The height sections provided with vortex generators may or may not correspond to (physical) tower segments.

The vortex generators in each height section are arranged in a certain pattern so that a certain number of vortex generators will be present in each height section. This number set in proportion to the total height of the respective height section defines the vortex generator density. For example, the first height section may have a height of 20 meters and comprise 1200 vortex generators, resulting in a first vortex generators density of 60 vortex generators per meter, and the second height section may have a height of 30 meters and comprise 900 vortex generators, resulting in a second vortex generators density of 30 vortex generators per meter. When calculating the vortex generator densities in this simple manner, it is assumed that the vortex generators applied in both height sections have a substantially similar design, in particular the same number of fins per vortex generator. Should this not be true, one needs to apply a suitable correction factor or needs to calculate the vortex generator density based on the total number of fins in each height section.

In accordance with the invention, the first vortex generator density is higher than the second vortex generator density. For example, the first vortex generator density may be at least 5 %, at least 10 %, at least 20 %, at least 30 %, or at least 50 % higher than the second vortex generator density. In particular, the first vortex generator density may be selected such that an optimal or close-to-optimal reduction of the vortex-shedding effect is achieved. In this case, applying additional vortex generators in the first height section would have no significant benefit. The second vortex generator density may be selected below this limit, so that less vortex generators than required for optimal or close-to-optimal effect are used.

The inventors realised that using different vortex generator densities for different height sections helps to make use of the vortex generators in the most efficient way. Although applying vortex generators to the outer surface is generally considered a simple and low-cost solution, in particular when compared to active damping means or large Scruton spirals, the number of required vortex generators and the need to attach them to the outer surface (which can be done off-site, when producing the corresponding tower segments, or on-site, while or after the tower is erected), leads to significant costs for each vortex generator, making it worthwhile to reduce the number of vortex generators as far as possible. This is why the prior art solutions described in the introductory portion suggest providing vortex generators only at an upper or intermediate section of the tower. However, even better cost-efficiency is achieved when first and second height sections are equipped with different vortex generator densities. Thereby, optimum or close-to optimum performance is obtained in the first height segment, while a lower, but still significant performance is obtained in the second height section.

In an aspect, the wind turbine tower has a bending vibration mode with a height-dependent amplitude and an anti-node at an anti-node height, wherein the first height section is arranged at the anti-node height. The bending vibration mode may be a first or second mode, in particular. When vibrating in first mode, the anti-node will be at the top of the wind turbine tower. When vibrating in second mode, the anti-node will be at an intermediate height, for example in a range of 65 % to 85 %, preferably 70 % to 80 %, of the total tower height, wherein the exact anti-node height depends on the construction of the wind turbine tower. When arranging the first height section at the anti-node height, for example centred about the anti-node height or such that it includes the anti-node height, the vortex-shedding effect is reduced most effectively where the forces caused by vortex-shedding have the strongest effect on the vibration excitation. Although at other heights, in a distance from the anti-node, periodic forces acting on the wind turbine tower with a resonance frequency may excite resonant vibrations as well, it was found that such excitation is most effective at the anti-node height. For this reason, it is deemed most important to apply a high vortex generator density at the anti-node height.

In an aspect, the first vortex generator density and the second vortex generator density are selected in proportion to the height-dependent amplitude at the respective heights of the first and second height sections. Selecting the vortex generator densities on this basis is an easy way to maximize the cost-efficiency of the vortex generators.

In an aspect, the first height section is arranged above the second height section. This arrangement is suitable in particular when first-mode bending vibrations shall be reduced.

In an aspect, the first height section is arranged below the second height section. This arrangement is suitable in particular when second-mode bending vibrations shall be reduced.

In an aspect, the first height section is arranged adjacent to the second height section. This means a continuous section of the wind turbine tower, including both height sections, is equipped with vortex generators.

In an aspect, the first height section or the second height section is arranged at the top of the wind turbine tower. In this aspect, the upper plane limiting the first or second height section, respectively, is arranged at the top end of the tower. This means wind-induced vibrations will be counteracted in particular at the top of the tower.

In an aspect, the first height section or the second height section is arranged in a distance from the top of the wind turbine tower. It was found that, in particular when it is desired to reduce second-mode bending vibrations, it is less important to address vortex-shedding in a tower region right at the top of the tower.

In an aspect, the tower in a third height section is provided with a plurality of the vortex generators in a third pattern having a third vortex generator density. This makes it possible to design the vortex generator densities even more precisely with regard to the specific situation in three different height sections.

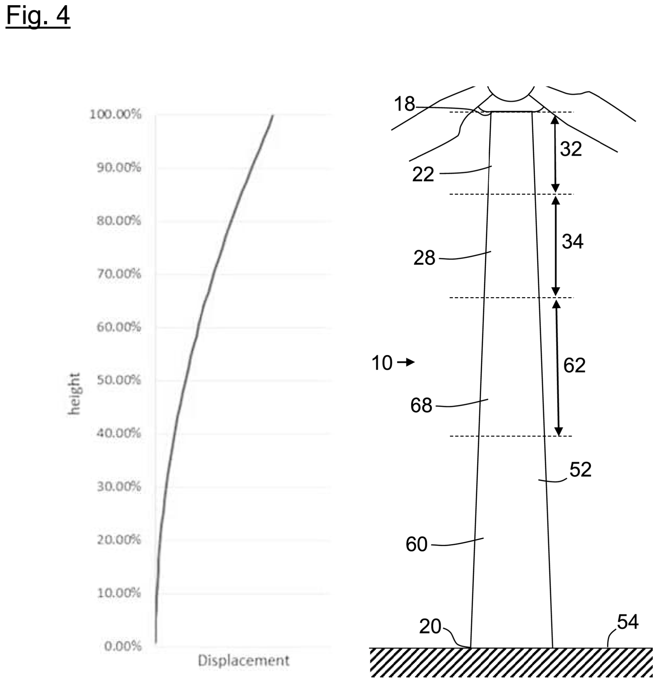

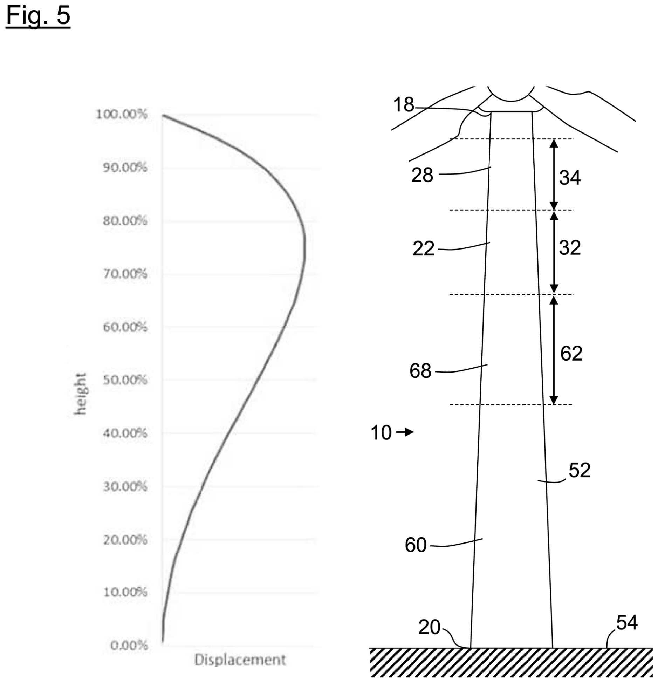

In an aspect, the third height section is arranged below the first and second height sections and the third vortex generator density is lower than the first vortex generator density and/or lower than or the same as the second vortex generator density. The third height section may be arranged below the first and second height sections or above the first and second height sections. Examples showing how these specific choices help to reduce wind-induced vibrations will be discussed with regard to the embodiments of Figs. 4 and 5.

In an aspect, the vortex generators comprise two fins each, the fins being arranged on a common base plate. This makes it easy to attach the vortex generators to the outer surface and also helps to place two fins in an ideal relative positions.

In an aspect, the plurality of vortex generators are arranged in vertical rows. This makes it easy to mount the vortex generators on the outer surface. If desired, a large number of fins or vortex generators comprising e.g. a pairs of fins can be arranged on a common base.

In an aspect, the first pattern has a first vertical interval between adjacent vortex generators and the second pattern has a second vertical interval between adjacent vortex generators, the vertical intervals measured along the longitudinal axis (in terms of the absolute distance between corresponding points of the adjacent vortex generators, e.g. between the lower-most points), wherein the first vertical interval is different from the second vertical interval. An angular interval between adjacent vortex generators may be constant so that the variation in vortex generator density does not affect the characteristics of the vortex-shedding reduction with respect to wind direction.

In an aspect, the first pattern has a first angular interval between adjacent vortex generators and the second pattern has a second angular interval between adjacent vortex generators, the angular intervals measured in degrees along a circumferential direction (between corresponding points of the adjacent vortex generators, e.g. between the left-most points), wherein the first angular interval is different from the second angular interval. This is an easy way to implement different vortex generator densities, in particular because the same rows of vortex generators can be used in both height sections.

In an aspect, the fins have a symmetrical shape with reference to a central plane of the respective fin, which plane is perpendicular to the outer surface. The shape may be a rectangle, a triangle, a trapezoid or a half-circle, for example. A symmetrical shape will influence the airflow passing by the vortex generator independent from the wind direction.

In the following, the invention is described in greater detail based on figures. The figures show:
- Fig. 1: a wind turbine in a schematic front view,
- Fig. 2: a section of the wind turbine tower of the wind turbine of Fig. 1 in a schematic front view,
- Fig. 3: a section of another wind turbine tower in a schematic front view,
- Fig. 4: a diagram next to another wind turbine tower shown in a schematic front view,
- Fig. 5: another diagram next to still another wind turbine tower shown in a schematic front view.

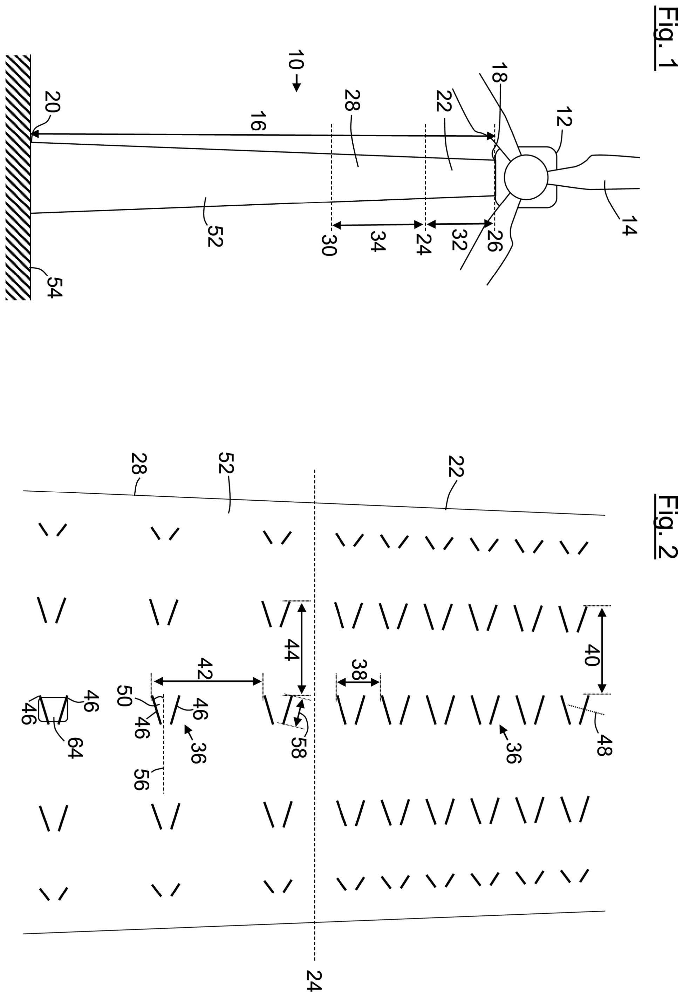

The wind turbine of Fig. 1 comprises a wind turbine tower 10 which has an outer surface 52 and carries a nacelle 12 bearing a rotor having a horizontal axis and three rotor blades 14. The wind turbine tower 10 has a tower height 16 measured between a top end 18 and a bottom end 20 of the wind turbine tower 10. The bottom end 20 is fixedly connected to the ground 54 via a tower foundation which is not shown. The wind turbine tower 10 has a conical shape, with a tower diameter decreasing from the bottom end 20 towards the top end 18. A longitudinal axis (not shown) of the wind turbine tower 10 is arranged vertically.

The wind turbine tower 10 comprises a first height section 22 which extends between a lower horizontal plane 24 and an upper horizontal plane 26, and a second height section 28 arranged below and adjacent the first height section 22. The second height section 28 extends between an upper horizontal plane which is identical to the lower horizontal plane 24 and a lower horizontal plane 30. The first height section 22 has a height 32, the second height section 28 has a height 34. Both height sections 22, 28 are provided with a plurality of vortex generators, which are not shown in Fig. 1.

Fig. 2 shows an enlarged section of the wind turbine tower of Fig. 1 centred around the lower horizontal plane 24. Above this lower horizontal plane 24, Fig. 2 shows a part of the first height section 22, below the lower horizontal plane 24, the figure shows a part of the second height section 28.

The first height section 22 is provided with a plurality of vortex generators 36 in a first pattern. The first pattern comprises vortex generators 36 arranged in vertical rows with a vertical interval 38 measured between adjacent vortex generators 36. The rows of vortex generators 36 in the first height section 22 have an angular interval 40, measured in degrees along the circular circumference of the wind turbine tower 10. In total, there are 10 rows of vortex generators 36, five of which are seen on the front side. The angular interval 40 in the first height section 22 thus is 36°.

The second height section 28 is provided with a plurality of vortex generators 36 in a second pattern. The second pattern comprises vortex generators 36 arranged in vertical rows with a vertical interval 42 measured between adjacent vortex generators 36. The rows of vortex generators in the second height section 28 have an angular interval 44. As in the first height section, there are 10 rows of vortex generators 36, so the angular interval 44 is 36° as well. However, the vertical interval 42 is about twice as large as the vertical interval 38, so that the first vortex generator density is about twice as high as the second vortex generator density.

Each of the vortex generators of Fig. 2 has two fins 46 which are arranged substantially perpendicular to an outer surface 52 of the wind turbine tower 10. Although not visible in Fig. 2, each fin 46 has a rectangular shape and a fin height. The shape of each fin 36 is symmetrical with reference to a central plane 48 of the respective fin 36. The central plane 48 of one of the fins 36 is shown as a dotted line and is arranged perpendicular to the outer surface 52. The fin length 58 extends at an angle 50 of about 15° with reference to a horizontal plane 56 which is perpendicular to the longitudinal axis.

At the bottom of Fig. 2 it is illustrated that two fins 46 of a vortex generator36 are connected to a common base plate 64 which is attached to the outer surface 52.

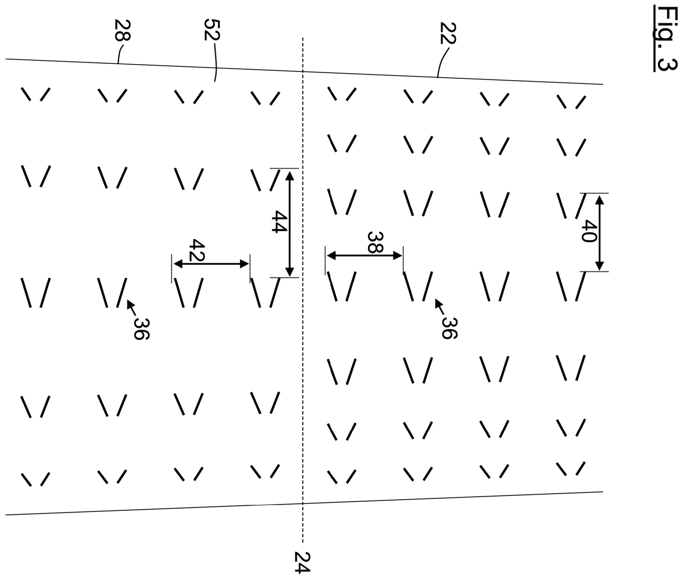

Fig. 3 shows an enlarged section of another wind turbine tower 10 including parts of first and second height sections 22, 28 and numerous vortex generators 36 as well. In the first height section 22, the angular interval 40 is about 26° (360° divided by 14), which is lower than in the second height section 28, where the angular interval 44 is 36°. The vertical interval 38 in the first height section 22 is the same as the vertical interval 42 in the second height section 28, so that the first vortex generator density is about 40 % higher than the second vortex generator density.

Fig. 4 in the diagram to the left shows the maximum lateral displacement of the longitudinal axis of the wind turbine tower 10 when vibrating in a first bending mode. At the top end 18 (height = 100 %) of the wind turbine tower 10, the vibration has an anti-node (displacement reaches a maximum value). The wind turbine tower 10 shown to the right has a first height section 22 with a height 32, a second height section 28 with a height 34 and a third hight section 68 with a height 62. The first height section 22 is arranged above and adjacent to the second height section 28, which is arranged above and adjacent to the third height section 68.

The three height sections 22, 28 and 68 are provided with vortex generators 36 (not shown) in first, second and third patterns having first, second and third vortex generator densities. The first vortex generator density is higher than second vortex generator density. The second vortex generator density is higher than third vortex generator density. In particular, the three vortex generator densities are selected in proportion to the amplitudes of the first mode bending vibration at the respective tower heights. A lowermost section 60 of the wind turbine tower 10, arranged below the third height section 68, is not provided with vortex generators 36.

Fig. 5 in the diagram to the left shows the maximum lateral displacement of the longitudinal axis of the wind turbine tower 10 when vibrating in a second bending mode. At the top end 18 (height = 100 %) of the wind turbine tower 10, the vibration has a node (no displacement). At a height of approximately 75 % of the total tower height, the vibration has its anti-node.

The wind turbine tower 10 shown to the right has a first height section 22 with a height 32, a second height section 28 with a height 34 and a third hight section 68 with a height 62. The first height section 22 is arranged below and adjacent to the second height section 28. The third height section 68 is arranged below and adjacent to the first height section 22. A lowermost section 60 of the wind turbine tower 10, arranged below the third height section 68, is not provided with vortex generators 36. In contrast to the wind turbine tower 10 of Fig. 4, at topmost section arranged above and adjacent to the second height section 28 is not provided with vortex generators 36 as well.

The three height sections 22, 28 and 68 are provided with vortex generators 36 (not shown) in first, second and third patterns having first, second and third vortex generator densities. The first vortex generator density of the first height section 22 is higher than the second vortex generator density of the second height section 28 and higher than the third vortex generator density of the third height section 68. The second vortex generator density is approximately the same as the third vortex generator density. In particular, the three vortex generator densities are selected in proportion to the amplitudes of the second mode bending vibration at the respective tower heights.

### List of reference numerals

- 10: wind turbine tower
- 12: nacelle
- 14: rotor blades
- 16: tower height
- 18: top end
- 20: bottom end
- 22: first height section
- 24: lower horizontal plane
- 26: upper horizontal plane
- 28: second height section
- 30: lower horizontal plane
- 32: height
- 34: height
- 36: vortex generators
- 38: vertical interval
- 40: angular interval
- 42: vertical interval
- 44: angular interval
- 46: fin
- 48: central plane
- 50: angle
- 52: outer surface
- 54: ground
- 56: horizontal plane
- 58: fin length
- 60: lowermost section
- 62: height
- 64: common base plate
- 68: third height section

In the following, the invention is described in other words in numbered clauses:
1. A wind turbine tower (10) comprising a longitudinal axis, an outer surface (52) and a plurality of vortex generators (36) attached to the outer surface (52), wherein
   - each vortex generator (36) comprises at least one fin (46) arranged substantially perpendicular to the outer surface (52) and having a fin length (58) and a fin height, the fin height measured in a direction perpendicular to the outer surface (52), the fin length (58) extending at an angle (50) in the range of 5° to 45° with reference to a plane (56) perpendicular to the longitudinal axis,
   - the wind turbine tower (10) in a first height section (22) is provided with a plurality of the vortex generators (36) in a first pattern having a first vortex generator density, and in a second height section (28) is provided with a plurality of the vortex generators (36) in a second pattern having a second vortex generator density, wherein the vortex generator densities are defined in terms of the total number of vortex generators (36) per height unit of the respective pattern, characterized in that
   - the first vortex generator density is higher than the second vortex generator density.
2. The wind turbine tower (10) of clause 1, characterised in that the wind turbine tower (10) has a bending vibration mode with a height-dependent amplitude and an anti-node at an anti-node height, wherein the first height section (22) is arranged at the anti-node height.
3. The wind turbine tower (10) of clause 1 or 2, characterised in that the first vortex generator density and the second vortex generator density are selected in proportion to the height-dependent amplitude at the respective heights of the first and second height sections (22, 28).
4. The wind turbine tower (10) of any of the clauses 1 to 3, characterised in that the first height section (22) is arranged above the second height section (28).
5. The wind turbine tower (10) of any of the clauses 1 to 3, characterised in that the first height section (22) is arranged below the second height section (28).
6. The wind turbine tower (10) of any of the clauses 1 to 5, characterised in that the first height section (22) is arranged adjacent to the second height section (28).
7. The wind turbine tower (10) of any of the clauses 1 to 6, characterised in that the first height section (22) or the second height section (28) is arranged at the top of the wind turbine tower (10).
8. The wind turbine tower (10) of any of the clauses 1 to 6, characterised in that the first height section (22) or the second height section (28) is arranged in a distance from the top of the wind turbine tower (10).
9. The wind turbine tower (10) of any of the clauses 1 to 8, characterised in that the wind turbine tower in a third height section (68) is provided with a plurality of the vortex generators (36) in a third pattern having a third vortex generator density.
10. The wind turbine tower (10) of clause 9, characterised in that the third height section (68) is arranged below the first and second height sections (22, 28) and the third vortex generator density is lower than the first vortex generator density and/or lower than or the same as the second vortex generator density.
11. The wind turbine tower (10) of any of the clauses 1 to 10, characterised in that the plurality of vortex generators (36) are arranged in vertical rows.
12. The wind turbine tower (10) of any of the clauses 1 to 11, characterised in that the first pattern has a first vertical interval (38) between adjacent vortex generators (36) and the second pattern has a second vertical interval (42) between adjacent vortex generators (36), the vertical intervals (38, 42) measured along the longitudinal axis, wherein the first vertical interval (38) is different from the second vertical interval (42).
13. The wind turbine tower (10) of any of the clauses 1 to 12, characterised in that the first pattern has a first angular interval (40) between adjacent vortex generators (36) and the second pattern has a second angular interval (44) between adjacent vortex generators (36), the angular intervals (40, 44) measured in degrees along a circumferential direction, wherein the first angular interval (40) is different from the second angular interval (44).
14. The wind turbine tower (10) of any of the clauses 1 to 13, characterised in that the vortex generators (36) comprise two fins (46) each, the fins (46) being arranged on a common base plate (64).
15. The wind turbine tower (10) of any of the clauses 1 to 14, characterised in that the fins (36) have a symmetrical shape with reference to a central plane (48) of the respective fin (36), which plane is perpendicular to the outer surface (52).

## Claims

1. A wind turbine tower (10) comprising a longitudinal axis, an outer surface (52) and a plurality of vortex generators (36) attached to the outer surface (52), wherein
• each vortex generator (36) comprises at least one fin (46) arranged substantially perpendicular to the outer surface (52) and having a fin length (58) and a fin height, the fin height measured in a direction perpendicular to the outer surface (52), the fin length (58) extending at an angle (50) in the range of 5° to 45° with reference to a plane (56) perpendicular to the longitudinal axis,
• the wind turbine tower (10) in a first height section (22) is provided with a plurality of the vortex generators (36) in a first pattern having a first vortex generator density, and in a second height section (28) is provided with a plurality of the vortex generators (36) in a second pattern having a second vortex generator density, wherein the vortex generator densities are defined in terms of the total number of vortex generators (36) per height unit of the respective pattern, **characterized in that**
• the first height section (22) is arranged above the second height section (28) and
• the first vortex generator density is higher than the second vortex generator density.

2. The wind turbine tower (10) of claim 1, **characterised in that** the wind turbine tower (10) has a bending vibration mode with a height-dependent amplitude and an anti-node at an anti-node height, wherein the first height section (22) is arranged at the anti-node height.

3. The wind turbine tower (10) of claim 2, **characterised in that** the first vortex generator density and the second vortex generator density are selected in proportion to the height-dependent amplitude at the respective heights of the first and second height sections (22, 28).

4. The wind turbine tower (10) of any of the claims 1 to 3, **characterised in that** the first height section (22) is arranged adjacent to the second height section (28).

5. The wind turbine tower (10) of any of the claims 1 to 4, **characterised in that** the first height section (22) is arranged at the top of the wind turbine tower (10).

6. The wind turbine tower (10) of any of the claims 1 to 5, **characterised in that** the first height section (22) or the second height section (28) is arranged in a distance from the top of the wind turbine tower (10).

7. The wind turbine tower (10) of any of the claims 1 to 6, **characterised in that** the wind turbine tower in a third height section (68) is provided with a plurality of the vortex generators (36) in a third pattern having a third vortex generator density.

8. The wind turbine tower (10) of claim 7, **characterised in that** the third height section (68) is arranged below the first and second height sections (22, 28) and the third vortex generator density is lower than the first vortex generator density and/or lower than or the same as the second vortex generator density.

9. The wind turbine tower (10) of any of the claims 1 to 8, **characterised in that** the plurality of vortex generators (36) are arranged in vertical rows.

10. The wind turbine tower (10) of any of the claims 1 to 9, **characterised in that** the first pattern has a first vertical interval (38) between adjacent vortex generators (36) and the second pattern has a second vertical interval (42) between adjacent vortex generators (36), the vertical intervals (38, 42) measured along the longitudinal axis, wherein the first vertical interval (38) is different from the second vertical interval (42).

11. The wind turbine tower (10) of any of the claims 1 to 10, **characterised in that** the first pattern has a first angular interval (40) between adjacent vortex generators (36) and the second pattern has a second angular interval (44) between adjacent vortex generators (36), the angular intervals (40, 44) measured in degrees along a circumferential direction, wherein the first angular interval (40) is different from the second angular interval (44).

12. The wind turbine tower (10) of any of the claims 1 to 11, **characterised in that** the vortex generators (36) comprise two fins (46) each, the fins (46) being arranged on a common base plate (64).

13. The wind turbine tower (10) of any of the claims 1 to 12, **characterised in that** the fins (36) have a symmetrical shape with reference to a central plane (48) of the respective fin (36), which plane is perpendicular to the outer surface (52).
